# EUROPÄISCHE PATENTSCHRIFT

(11) **EP 0 356 600 B1**
(45) Veröffentlichungstag und Bekanntmachung des Hinweises auf die Patenterteilung: **07.04.1993**
(21) Anmeldenummer: 88810490.8
(22) Anmeldetag: 15.07.1988
(51) Int. Cl.: A44B 19/60, B29D 5/02

(54) **Verfahren und Vorrichtung zur Herstellung von Reissverschlüssen**
Method and apparatus for manufacturing slide fasteners
Procédé et machine pour fabriquer des fermetures à glissière

(43) Veröffentlichungstag der Anmeldung: 07.03.1990
(73) Patentinhaber: Opti Patent-, Forschungs- und Fabrikations-AG, 8750 Riedern-Allmeind (CH)
(72) Erfinder: Mayerhofer, Friedrich, CH-2543 Lengnau (CH)
(74) Vertreter: Andrejewski, Walter

(56) Entgegenhaltungen:
- CH-A- 282 353
- CH-A- 393 725
- CH-A- 635 026
- CH-A- 662 781
- FR-A- 1 255 024
- FR-A- 2 221 261
- FR-A- 2 366 114

## Beschreibung

Die vorliegende Erfindung bezieht sich auf ein Verfahren zur Herstellung von Reissverschlüssen aus textilen Tragbändern mit aufgespritzten Verschlussgliedreihen gemäss Oberbegriff von Patentanspruch 1 sowie auf eine Vorrichtung zur Durchführung des Verfahrens gemäss Oberbegriff von Patentanspruch 5. Ein solches Verfahren und eine solche Vorrichtung sind in der CH-A-635 026 beschrieben, wobei als wesentlicher Teil ein Querschlitten offenbart ist, der es ermöglicht, mit dem gleichen Spritzwerkzeug sowohl die Verschlussglieder mit den oberen Stoppteilen als auch die Endglieder in einem einzigen Spritzvorgang herzustellen sowie einen beliebig langen mittleren Teil. Dieses Verfahren und diese Vorrichtung brachten einen technischen Fortschritt gegenüber dem damaligen Stand der Technik, da vorgängig die Endglieder gesondert gespritzt und angebracht werden mussten. Es ist jedoch mit dem Verfahren und der Vorrichtung gemäss dieser Patentschrift nicht möglich, auch noch den Steckerkasten zu spritzen, der gemäss CH-A-626 241 gesondert hergestellt und mit einem Anschlussstecker eines der Endglieder der vorher erwähnten Patentschrift, verbunden wird. Das gesonderte Herstellen des Steckerkastens und dessen Verbindung mit dem Anschlussstecker erfordert weitere Arbeitsgänge und ist somit kostenintensiv. Dies gilt auch für die FR-A-1 255 024, die nur die Herstellung der Endglieder beschreibt.

Es ist ausgehend von diesem bekannten Stand der Technik eine Aufgabe der Erfindung, ein Verfahren und eine Vorrichtung zur Herstellung von Reissverschlüssen anzugeben, mit denen Verschlussglieder und sämtliche Endglieder in einem Arbeitsgang hergestellt werden können.

Diese Aufgabe wird mit dem Verfahren und der Vorrichtung gelöst, die in den Patentansprüchen 1 und 5 definiert sind. Weiterausbildungen sind in den abhängigen Ansprüchen definiert.

Ausserdem sind im wesentlichen zwei Typen von Reissverschlussgliedern auf dem Markt, ein Typ mit versetzt angeordneten Gliedern, wobei jedes Glied aus zwei versetzt zueinander angeordneten Zähnen beidseitig des Textilbandes besteht, und ein sogenannter Schlitztyp, wobei das Glied einteilig und beidseitig des Textilbandes angeordnet ist und in der dem anderen Glied zugewandten Frontseite ein Schlitz angeordnet ist.

In einer Weiterentwicklung der Erfindung ist es möglich, mit dem gleichen Werkzeug und zusätzlichen Teilen, in einem Arbeitsgang sowohl sämtliche Verschluss- und Endglieder als auch Glieder des versetzten oder geschlitzten Typs zu Spritzen, ohne Nachbearbeitung.

Die Erfindung wird im folgenden anhand einer Zeichnung von Ausführungsbeispielen näher erläutert.
- Fig. 1: zeigt in Draufsicht und teilweise schematisch den Unterteil eines Spritzwerkzeugs der Vorrichtung gemäss der Erfindung,
- Fig. 2: zeigt einen Längsschnitt gemäss der Linie II-II in Fig. 1,
- Fig. 3: zeigt eine Ansicht von links von Fig. 1,
- Fig. 4: zeigt den mittleren Teil mit den oberen und unteren Endteilen eines fertiggespritzten Reissverschlusses am Spritzwerkzeug und die
- Fig. 5 + 6: zeigen Schnitte durch das Werkzeug in den durch die Linien V-V, VI-VI angedeuteten Positionen.

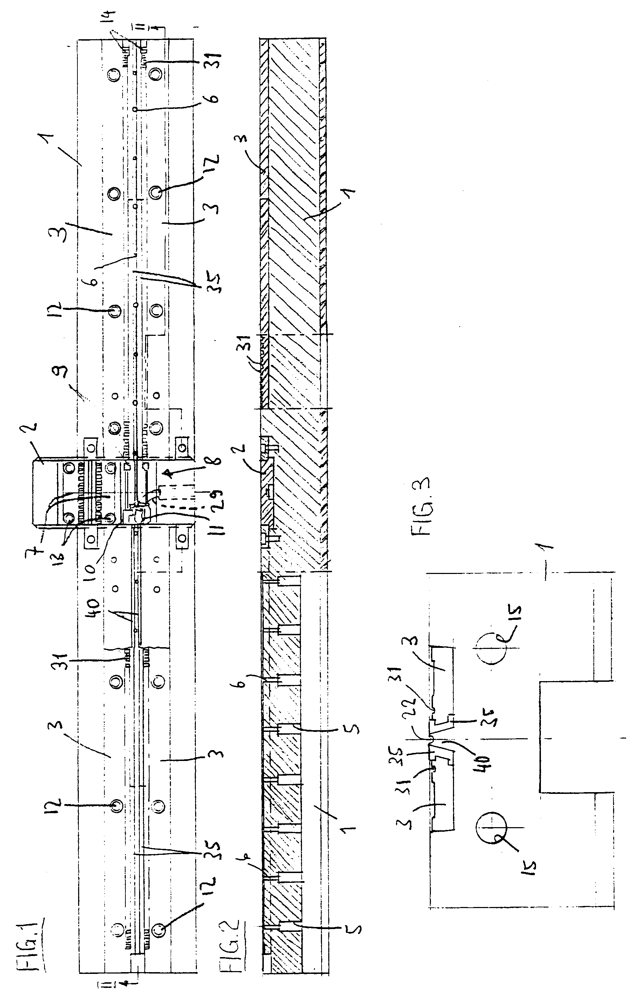

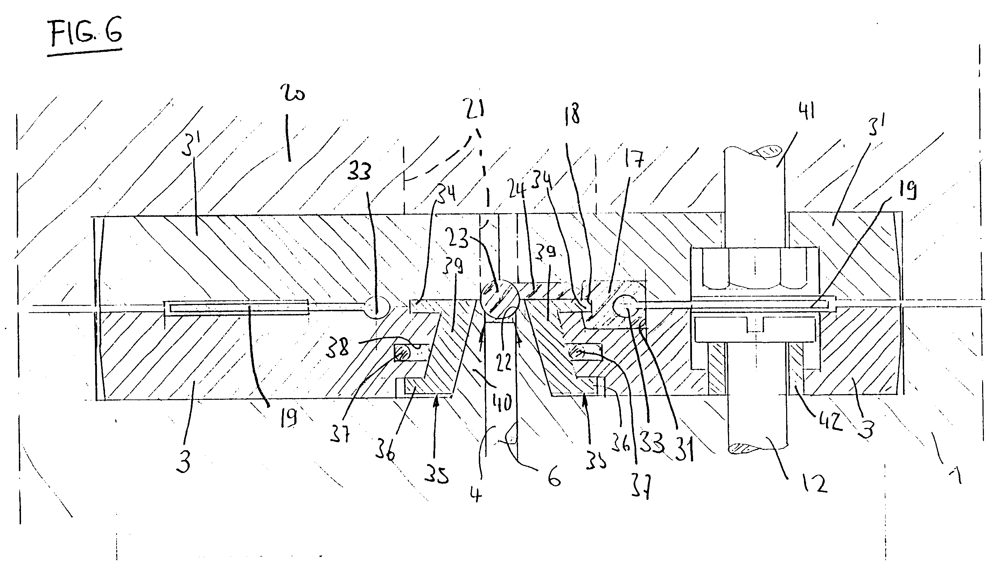

In den Fig. 1 und 2 sind einige Teile des Spritzwerkzeuges, bzw. des Spritzwerkzeugunterteiles der erfindungsgemässen Vorrichtung dargestellt. Man erkennt den Werkzeugkörper 1 des Unterteils, das untere Querschieberteil 2, das etwa in der Mitte angeordnet ist, auf dem Werkzeugkörper 1 aufgeschraubte Gliederleisten 3 sowie Bohrungen 5 und 6 im Körper für Ausstosser 4, siehe auch Fig. 6. Die Ausstosser werden wie bekannt durch eine Ausstosserplatte betätigt. Auf dem Querschieberteil 2 befinden sich, in der Zeichnung oben, zwei angeschraubte Gliederleisten 7 sowie ein Endteilstück 8, mit, auf der Zeichnung rechts, zwei Vertiefungen 9 für die oberen Stoppteile und gegenüber, auf der Zeichnung links, eine Ausnehmung 10 für das Formen des Kupplungssteckers und ein Formteil 11 für das Formen des Steckerkastens. Die Gliederleisten werden mittels Schrauben 12 mit dem Werkzeugkörper 1 verschraubt. Das Querschieberteil 2 ist mittels Schrauben 13 ebenfalls mit dem Werkzeugkörper verschraubt.

Ausser dem Formteil 11 für den Steckerkasten, das später näher beschrieben wird, ergibt sich bereits jetzt ein wesentlicher Unterschied zum bekannten Stand der Technik dadurch, dass die Vertiefungen 31 für die Verschlussglieder, respektive Endteile, nicht direkt im Werkzeugkörper geformt sind, sondern in abnehmbaren und auswechselbaren Gliederleisten. Dies hat nicht nur den Vorteil, dass mit dem gleichen Werkzeug verschiedene Gliedertypen gespritzt werden können, sondern auch noch einen weiteren wesentlichen Vorteil, dass gehärtete und verwindungssteife Leisten verwendet werden können, die zudem exakt auf dem Werkzeugkörper ausgerichtet werden können, wodurch es möglich ist, wesentlich längere Werkzeuge mit der erforderlichen Genauigkeit herzustellen, als dies nach dem Stand der Technik möglich ist. So können ohne weiteres Werkzeuge mit einer Länge von 650 bis 700 mm hergestellt werden, ohne dass besondere Massnahmen bezüglich der erforderlichen Genauigkeit ergriffen werden müssen. Die beiden Enden, auf der Fig. 1 rechts, der Gliederleisten weisen je eine Endausnehmung 14 auf, um zu ermöglichen, die ersten Glieder des zuerst gespritzten Reissverschlussteiles dort einzuhängen, um dann entweder nur Reissverschlussglieder zu spritzen, falls der Querschieber in die andere, nicht dargestellte Stellung geschoben ist, oder die oberen Stoppglieder.

In Fig. 3 erkennt man ausser den beiden Gliederleisten 3 zwei Längsbohrungen 15, die dazu dienen, das Werkzeug mittels eines geeigneten Mediums auf einer bestimmten Temperatur zu halten, sowie eine den Hauptkanal formende Längsnut 22.

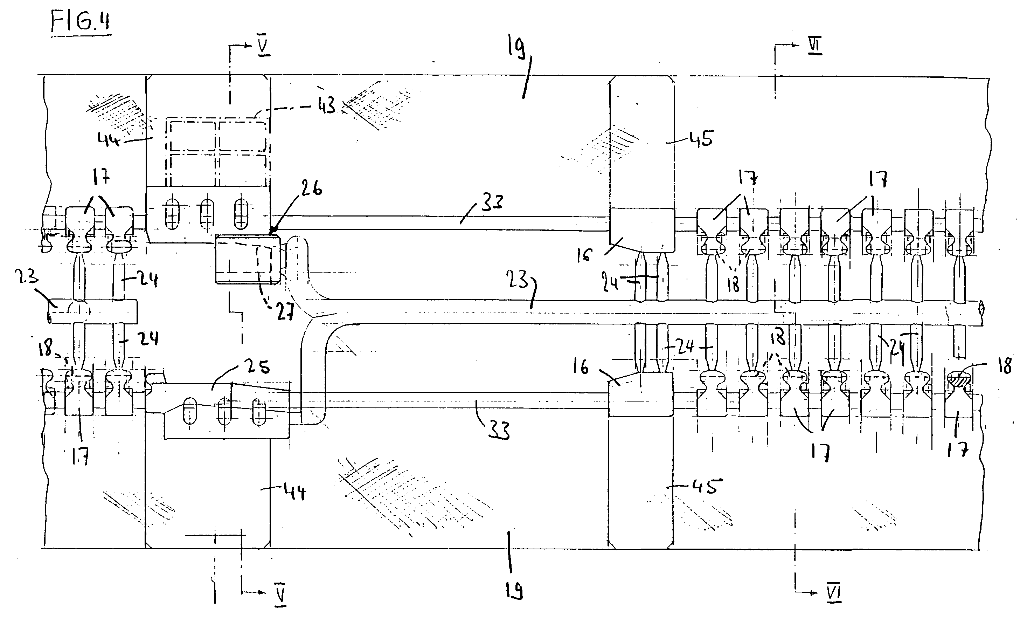

Fig. 4 zeigt im vergrösserten Massstab den mittleren Teil eines Reissverschlussgusses, wie er sich kurz vor dem Abheben vom Werkzeug darstellt. Auf der rechten Seite befinden sich die beiden oberen Stoppglieder 16 mit den rechts anschliessenden Gliedern 17, wobei es sich hier um Glieder des geschlitzten Typs handelt, in denen der Schlitz 18 eingezeichnet ist. Die Stoppglieder und die anderen Glieder sind beidseitig des Textilbandes 19 befestigt. Der Kunststoff wird von oben eingespritzt, d.h. durch den in Fig. 6 dargestellten oberen Werkzeugkörper 20, in welchem auch die Hauptzuleitung 21 angedeutet ist, die in die Längsnut 22, siehe Fig. 3, zwischen den beiden Gliederleisten mündet, die den Hauptstrang 23 bildet, von dem die Kanäle 24 zu den verschiedenen Gliedern abzweigen. Aus Fig. 4 geht ferner hervor, dass alle vier Endglieder zusammen mit dem einen Reissverschlussteil, in den Zeichnungen rechts, gegossen werden.

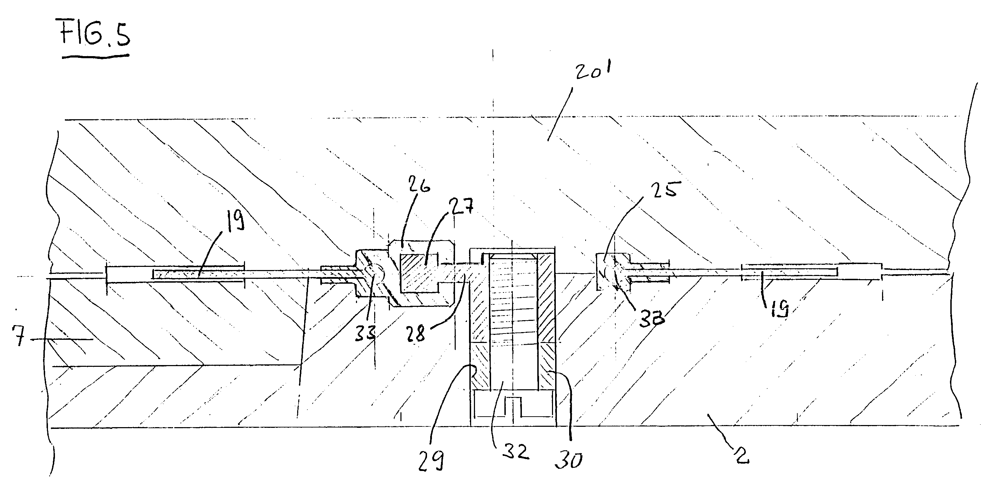

Während das Spritzen der oberen Stoppglieder und des Kupplungssteckers 25 keine besonderen Probleme bietet, da dazu lediglich Ausnehmungen im Werkzeug, resp. Gliederleisten, benötigt werden, bot das gleichzeitige Spritzen des Steckerkastens 26 offensichtlich derartige Schwierigkeiten, dass dies bis anhin nicht möglich schien, denn der Steckerkasten setzt einen Körper (in Fig. 4 gestrichelt gezeichnet) 27 voraus, der nicht wie die Werkzeugteile nach oben oder unten herausgenommen werden kann. Aus Fig. 1 und dem Schnitt von Fig. 5 erkennt man die Lösung dieses Problems. Der den Steckerkasten formende Körper 27 ist über einen Arm 28 mit einem viertelkreisförmigen Stössel 30 verbunden, der in einer entsprechend gekrümmten Nut 29 im Schieberteil 2 läuft und mechanisch betätigt wird, in Figur 5 von hinten nach vorne. Der Stössel 30 ist mittels einer Schraube 32 am Arm 28 befestigt.

Man erkennt in Fig. 5 auch die übrigen, bereits beschriebenen Teile wie das Textilband 19, den Steckerkasten 26, ein oberes Stoppglied 16 und man erkennt ferner, dass die Textilbänder wie üblich an ihren inneren Rändern eine Verdickung 33 aufweisen und ferner den oberen Werkzeugkörper 20. Ausserdem ist bekannt, und geht auch aus Figur 5 hervor, dass das Werkzeugoberteil 20 entsprechend dem Unterteil 2 ausgebildet ist mit Ausnahme der Ausstosser im Unterteil und den Zuleitungen für den Kunststoff im Oberteil. Ein weiterer Unterschied zwischen Unter- und Oberteil besteht beim Schieberoberteil 20', der keine Gliederleisten aufweist, sondern nur die entsprechenden Vertiefungen und Ausnehmungen für die Glieder und Endteile.

Die bis jetzt beschriebenen Teile, Einrichtungen und Vorteile gelten für sämtliche Reissverschlusstypen, d.h. des versetzten oder des geschlitzten Typs. Aus Fig. 6 wird auch ersichtlich, warum das Spritzen der geschlitzten Glieder in einem Vielfach-Werkzeug grosse Schwierigkeiten hervorruft, denn ähnlich wie beim Stekkerkasten kann das Einsatzstück, das den Schlitz formt nicht nach oben oder unten abgezogen werden, sondern nur seitlich. Wie aus der nachfolgenden Beschreibung noch ersichtlich werden wird, wird die Lösung dieses Problems dadurch ermöglicht, dass die Ausnehmungen für die Glieder nicht direkt in den Werkzeugkörperteilen angeordnet sind, sondern in Gliederleisten. Wie erwähnt, bedingt das Spritzen von geschlitzten Gliedern ein seitliches Bewegen der Einsätze 34, die den Schlitz 18 am Glied 17 formen. Der Einsatz 34 ist ein kurzer Schenkel einer U-förmigen Einsatzleiste 35, die beweglich an der Gliederleiste 3 befestigt ist, wobei der obere Schenkel 34, d.h. der Einsatz, und der untere Schenkel 36 die Einsatzleiste führen. Etwas unterhalb der Mitte wird über eine Druckfeder 37, die in einer Ausnehmung 38 in der Gliederleiste geführt ist, Druck auf die Einsatzleiste ausgeübt derart, dass diese gegen die Mitte, d.h. aus dem Schlitz heraus gedrückt wird. Die beiden langen Schenkel 39 der Einsatzleisten sind konisch zueinander zulaufend angeordnet und stützen sich auf eine kegelstumpfartig ausgebildete Längsleiste 40 ab, die einstückig mit dem unteren Werkzeugkörper 1 gebildet ist. In der hier gezeigten geschlossenen Stellung, kurz nach dem Spritzen der Glieder und vor dem Abheben derselben, stützt diese Längsleiste die Einsatzleiste 35 und damit den Einsatz 34 ab.

Beim bekannten Stand der Technik für die Herstellung von Gliedern des versetzten Typs, z. B. gemäss der FR-A-2 221 261 oder CH-A-393 725, wird nach dem Spritzen das Formoberteil abgehoben und der gespritzte Reissverschlussteil, ähnlich wie aus Fig. 6 ersichtlich, durch die Ausstosser 4 weggehoben, während beim erwähnten Stand der Technik die Gliederketten zuerst gespreizt, dann längs weggezogen werden. Bei der vorliegenden Ausbildung des Werkzeuges stossen die Ausstosser nicht nur die gespritzten Reissverschlussteile nach oben, sondern auch die mit ihnen über die Einsatzleiste 35 verhängten Gliederleisten 3. Während die oberen Gliederleisten 3′ fest mit dem oberen Werkzeugkörper 20 über Schrauben 41 verbunden sind, sind die Gliederleisten 3 über die Schrauben 12 derart mit dem unteren Werkzeugkörper 1 verbunden, dass die Leisten 3 eine Auf- und Abwärtsbewegung ausführen können. Zu diesem Zwecke sind um die Schrauben 12 Buchsen 42 angeordnet, an denen die Gliederleisten 3 geführt sind. Beim Hinaufstossen der Reissverschlussteile und der damit verhängten Einsatzleisten 35 heben diese von der kegelstumpfartigen Längsleiste 40 ab und ermöglichen es der Druckfeder 37 die Einsatzleiste, resp. deren Einsatz 34 aus den Schlitzen 18 der Glieder 17 zu stossen und somit den Reissverschlussteil freizugeben. Dadurch fallen auch die Gliederleisten 3 in die Ursprungslage zurück. Wie aus dem Stand der Technik bekannt, werden die Ausstosser in der Regel durch eine Ausstosserplatte betätigt, wobei die Ausstosser beim unteren Querschieberteil anders gestaltet sein müssen als die Ausstosser für die übrigen Teile, d.h. zweckmässig zweiteilig und mit einer Rückholfeder im Schieberteil.

Aus obiger Beschreibung geht hervor, dass mit dem beschriebenen Werkzeug alle Reissverschlussgliedertypen mit allen Teilen in einem Arbeitsablauf gespritzt werden können, wofür es früher mehrere Arbeitsabläufe benötigte, insbesondere die zeitraubenden und kostenintensiven Bearbeitungen, um die Schlitze für die Reissverschlüsse herzustellen oder den Ansteckkasten getrennt zu formen und anzubringen.

Bei den Enden können noch weitere Vereinfachungen getroffen werden. Gemäss dem Stand der Technik ist es üblich, wie in Fig. 4 oben angedeutet, an den Enden sogenannte "Schmetterlinge" 43, d.h. Kunststoffgitter anzuspritzen, um eine Verstärkung in diesem Bereich zu erzielen. Stattdessen ist es auch möglich, ein Verstärkungsband 44 vorzusehen, das vor dem Einlegen des Bandes in das Werkzeug an den geeigneten Stellen aufgebracht werden kann, um die gefährdeten Stellen zu verstärken. Mit diesem Verfahren ist es auch möglich, an den oberen Stoppgliedern schmälere Verstärkungsbänder 45 aufzubringen. Da das Textilband 19 kontinuierlich ab Rolle in das Werkzeug eingespeist wird, können die Verstärkungsbänder ohne weiteres automatisch vorher aufgebracht, vorzugsweise mittels Ultraschall aufgeschweisst werden.

Um die Wirtschaftlichkeit und Langlebigkeit des Werkzeuges zu erhöhen, können die Einsatzleisten aus Hartmetall gefertigt werden oder mittels bekannter Beschichtungsverfahren mit einer sehr harten Schicht versehen werden, die einerseits verschleissarm ist und andererseits eine gegenüber Kunststoff verringerte Haftung aufweist, so dass das Abheben des gespritzten Reissverschlussteils erleichtert wird.

Die Arbeitsweise ist aus Fig. 4 ersichtlich. Dort handelt es sich beim rechten Reissverschlussteil entweder um einen Anguss, d.h. um den ersten Guss überhaupt oder um einen bereits gespritzten Teil mit den Endgliedern 25 und 26. Nach dem Spritzen wird das Werkzeugoberteil angehoben, der Reissverschlussteil ausgeworfen und weiter, d.h. im vorliegenden Fall nach rechts transportiert. Darauffolgend können entweder die oberen Stoppteile 16 gespritzt werden oder die Querschieberteile werden in die andere Stellung gebracht, um nur Verschlussglieder zu spritzen, wobei dieser Vorgang bei besonders langen Reissverschlüssen entweder wiederholt werden kann oder nachher die oberen Stoppglieder 16 und die unteren Endteile 25 und 26 mit den dazugehörigen Gliedern gespritzt werden können. Der Vorgang läuft vollautomatisch ab und wird von einer entsprechenden Elektronik gesteuert, die für einen Fachmann ohne weiteres herstellbar und ausführbar ist. Durch die Auswechselbarkeit der Gliederleisten ist es möglich, alle auf dem Markt bekannten Reissverschlüsse herzustellen, zum Beispiel, eventuell nach Anpassung der Querschieber, Reissverschlüsse mit einem offenen oder geschlossenen Ende oder doppelt offene oder kontinuierliche Reissverschlüsse beider oben angegebener Gliedertypen oder anderer Gliedertypen herzustellen. Dabei müssen lediglich die dazu gehörigen Teile der Querschieberteile ausgewechselt werden.

Ausserdem bietet das nach dem Baukastensystem aufgebaute Spritzwerkzeug dem Anwender nicht nur die Möglichkeit, die verschiedenen Reissverschlussarten auszusuchen und zusammenzustellen, sondern auch die leichte Austauschbarkeit, bzw. das schnelle Einrichten für verschiedene Grössen der Glieder sowie ein leichtes Auswechseln nur einzelner Gliederleisten, die durch Verschleiss oder sonstwie beschädigt wurden.

Ferner können entweder auf einer oder beiden Seiten Distanzkeile eingeschoben werden, um eine bestimmte Länge einzustellen.

## Patentansprüche

1. Verfahren zur Herstellung von Reissverschlüssen aus textilen Tragbändern mit aufgespritzten Verschlussgliederreihen, oberen Stoppteilen und unteren, teilbaren oder unlösbaren Endgliedern, wobei in einem ersten Arbeitsgang in einem einzigen Spritzvorgang die Endglieder der Verschlussgliederreihen und untere Endgliederteile (25) eines ersten Reissverschlusses und gleichzeitig in einem Abstand davon die oberen Stoppteile (16) mit dem Anfang der Verschlussgliederreihen für einen zweiten Reissverschluss gespritzt werden, danach in einem oder mehreren Arbeitsgängen die gewünschte Länge der beiden Verschlussgliederreihen dieses zweiten Reissverschlusses aufgespritzt und anschliessend im folgenden Arbeitsgang in einem einzigen Spritzvorgang wieder die Endglieder der Verschlussgliederreihen mit unteren Endgliederteilen dieses zweiten Reissverschlusses und in Abstand davon die oberen Stoppteile mit dem Anfang der Verschlussgliederreihen eines dritten Reissverschlusses aufgespritzt werden u.s.w., dadurch gekennzeichnet, dass im gleichen Arbeitsgang je ein Kupplungsstecker (25) und ein Stekkerkasten (26) gespritzt werden.

2. Verfahren nach Anspruch 1, dadurch gekennzeichnet, dass die Verschlussgliederreihen in beliebiger Länge, und sowohl die oberen Stoppteile, der Kupplungsstecker und der Steckerkasten als auch die Glieder des versetzen oder geschlitzten Typs in einem Arbeitsablauf gespritzt werden.

3. Verfahren nach Anspruch 1 oder 2, dadurch gekennzeichnet, dass vor dem Einlegen des textilen Tragbandes (19) in das Spritzwerkzeug, an der Stelle der Endteile ein Verstärkungsband (44, 45) angebracht wird.

4. Verfahren nach Anspruch 3, dadurch gekennzeichnet, dass das Verstärkungsband mittels Ultraschall-Schweissen angebracht wird.

5. Vorrichtung zur Ausführung des Verfahrens nach Anspruch 1, mit einem zweiteiligen Spritzwerkzeug (1, 20), das je zwei Reihen von einander gegenüberliegenden Vertiefungen für die Bildung der Verschlussglieder aufweist, wobei jede Werkzeughälfte mit einem in verschiedene Arbeitsstellungen bringbaren Querschieber (2) versehen ist und dieser Querschieber sowohl eine Reihe von Vertiefungen für die Bildung von Verschlussgliedern als auch in Abstand voneinander angeordnete Vertiefungen (9; 10) für die gleichzeitige Ausbildung der oberen Stoppteile und von unteren Endgliederteilen aufweist, dadurch gekennzeichnet, dass der untere Querschieber (2) neben der Vertiefung (10) für den Kupplungsstecker ein Formteil (11) für den Steckerkasten (26) aufweist, in dem ein in der Schieberebene verschiebbarer Formkörper (27) angeordnet ist.

6. Vorrichtung nach Anspruch 5, dadurch gekennzeichnet, dass die unteren und oberen Werkzeugteile (1, 20) und das Schieberunterteil (2) austauschbare Gliederleisten (3, 3') mit Vertiefungen (31) zur Bildung von Verschlussgliedern (17) aufweisen, die mittels Schrauben (12) befestigt sind.

7. Vorrichtung nach Anspruch 5 oder 6, dadurch gekennzeichnet, dass die Gliederleisten (3, 3') aus gehärtetem Stahl oder aus einem beschichteten Hartmetall oder Stahl bestehen.

8. Vorrichtung nach einem der Ansprüche 5 bis 7, dadurch gekennzeichnet, dass der Formkörper (27) über einen viertelkreisartigen Stössel (30) verschiebbar ist, der in einer entsprechenden Nut (29) im Schieberunterteil (2) läuft.

## Claims

1. Method to produce zippers from textile carrier bands with closing link runs sprayed on, upper stop parts and lower, divisible or non detachable end members, whereby in a first phase of operation the end members of the closing link runs and lower end member parts (25) of a first zipper, and simultaneously spaced therefrom the upper stop parts (16) with the lead of closing link runs for a second zipper are sprayed on in a single spraying process, thereafter the desired length of both closing link runs of the said second zipper is sprayed on in one or more operation phases, and then in the following operation phase the end-stops of the closing link runs with lower end member parts of the said second zipper, and spaced therefrom the upper stop parts with the lead of closing link runs of a third zipper etc. are sprayed on, **characterized** in that one coupling connector (25) each and one connector box (26) are sprayed in the same operation phase.

2. Method according to claim 1, **characterized** in that the closing link runs in any length, and the upper stop parts, the coupling connectors and the connector box as well as the members of the offset or slotted type are sprayed in one operating process.

3. Method according to claim 1 or 2, **characterized** in that a reinforcing (44, 45) band is attached on location of the end parts before the textile carrier band (19) is inserted into the injection moulding die.

4. Method according to claim 3, **characterized** in that the reinforcing band is attached by means of ultrasonic welding.

5. Apparatus for performing the method according to claim 1 with a two-piece injection moulding die (1, 20) which has two rows of recesses each arranged opposite to each other for forming the closing links, whereby each die half is equipped with a cross slide (2) which can be brought into various working positions, and the said cross slide has a row of recesses for forming the closing links as well as recesses (9, 10) arranged in distance of each other for simultaneously forming the upper stop parts and the lower end-stop parts, **characterized** in that the lower cross slide (2) has adjacent to the recess (10) for the coupling connector a forming part (11) for the connector box (26) in which a forming body (27) is displaceably arranged in the slide plane.

6. Apparatus according to claim 5, **characterized** in that the lower and upper die parts (1, 20) and the lower part of the slide (2) have exchangeable link rails (3, 3') with grooves (31) fastened by means of screws (12) for forming closing links (17).

7. Apparatus according to claim 5 or 6, **characterized** in that the link rails (3, 3') are made of hardened steel or of coated hard metal or of steel.

8. Apparatus according to any of the claims 5 to 7, **characterized** in that the forming body (27) is displaceable by means of a ram (30) shaped like a quarter circle and running in a corresponding groove (29) in the lower slide part (2).

## Revendications

1. Procédé destiné à la fabrication de fermetures à glissière à partir de sangles textiles munies de rangées de maillons de fermeture, de pièces d'arrêt supérieures et de maillons d'extrémité inférieurs séparables ou indétachables moulés, les maillons d'extrémité des rangées de maillons de fermeture et les parties inférieures des maillons d'extrémité (25) d'une première fermeture à glissière et simultanément, à un certain intervalle, les pièces d'arrêt supérieures (16) étant dans une première phase moulées avec le début des rangées de maillons de fermeture destinés à une seconde fermeture à glissière au cours d'une opération de moulage unique, la longueur souhaitée des deux rangées de maillons de fermeture de cette seconde fermeture à glissière étant consécutivement moulée au cours d'une ou plusieurs opérations et les maillons d'extrémité des rangées de maillons de fermeture étant ensuite moulés avec les parties inférieures des maillons d'extrémité de cette seconde fermeture à glissière et, à un certain intervalle, les pièces d'arrêt supérieures avec le début des rangées de maillons de fermeture d'une troisième fermeture à glissière, etc. au cours de l'opération suivante, **caractérisé** par le fait qu'une fiche de couplage (25) et un logement de prise (26) sont respectivement moulés au cours de la même opération.

2. Procédé selon la revendication 1, **caractérisé** par le fait que les rangées de maillons de fermeture de longueur quelconque et les pièces d'arrêt supérieures, la fiche de couplage et le logement de prise de même que les maillons en zigzag ou fendus sont moulés au cours d'une seule opération.

3. Procédé selon les revendications 1 ou 2, **caractérisé** par le fait qu'une bande de renforcement (44, 45) est appliquée à l'endroit des pièces d'extrémité avant l'insertion de la sangle textile (19) dans le moule à injection.

4. Procédé selon la revendication 3, **caractérisé** par le fait que la bande de renforcement est appliquée par soudage par ultrasons.

5. Dispositif destiné à la réalisation du procédé selon la revendication 1, composé d'un moule à injection en deux parties (1, 20) présentant chacune deux rangées de creux se faisant face pour la formation des maillons de fermeture, chaque moitié du moule étant munie d'une coulisse transversale (2) pouvant être placée dans différentes positions de travail et cette coulisse transversale présentant tant une série de creux pour la formation des maillons de fermeture que des creux (9; 10) disposés à intervalles les uns des autres pour la formation simultanée des pièces d'arrêt supérieures et des parties inférieures des maillons d'extrémité, **caractérisé** par le fait que la coulisse transversale inférieure (2) présente à côté du creux (10) pour la fiche de couplage une pièce moulée (11) pour le logement de prise (26), pièce moulée dans laquelle est disposé un corps moulé (27) pouvant être déplacé au niveau de la coulisse.

6. Dispositif selon la revendication 5, **caractérisé** par le fait que les parties inférieure et supérieure de l'outil (1, 20) et la partie inférieure de la coulisse (2) présentent des barres à maillons interchangeables (3, 3') avec des creux (31) pour la formation des maillons de fermeture (17) fixées au moyen de vis (12).

7. Dispositif selon les revendication 5 ou 6, **caractérisé** par le fait que les barres à maillons (3, 3') sont en acier trempé ou en métal dur ou en acier plaqués.

8. Dispositif selon l'une des revendications de 5 à 7, **caractérisé** par le fait que le corps moulé (27) peut être déplacé par l'intermédiaire d'un coulisseau (30) en quart de cercle se déplaçant dans une rainure correspondante (29) dans la partie inférieure de la coulisse (2).
